# EUROPÄISCHE PATENTSCHRIFT

(11) **EP 0 408 787 B1**
(45) Veröffentlichungstag und Bekanntmachung des Hinweises auf die Patenterteilung: **02.02.1994**
(21) Anmeldenummer: 89113286.2
(22) Anmeldetag: 19.07.1989
(51) Int. Cl.: F16B 21/20

(54) **Flächenhaftes Klemmelement**
Flat clamping element
Elément de serrage plané

(43) Veröffentlichungstag der Anmeldung: 23.01.1991
(73) Patentinhaber: SIEMENS AKTIENGESELLSCHAFT, 80333 München (DE)
(72) Erfinder: Kammerl, Franz, Dipl.-Ing. (FH), D-8411 Endlfeld (DE)

(56) Entgegenhaltungen:
- DE-A- 2 105 990
- DE-U- 1 979 415
- FR-A- 2 382 607
- GB-A- 1 073 147

## Beschreibung

Die Erfindung bezieht sich auf eine Verbindung mit einem Polyeder und einem flächenhaften Klemmelement, das längs der Kontur einer Ausnehmung Berührungszonen zum Polyeder bildet, den es in einer Klemmposition festhalten kann oder an dem es sich anklemmen läßt, um andere Gegenstände zu halten.

Federringe und Klemmplättchen sowie Splinte sind in den vielfältigsten Ausführungen für einfache und rasche Befestigungen bekannt. Häufig ist es jedoch schwierig, derartige Klemmelemente wieder zu lösen.

Der Erfindung liegt die Aufgabe zugrunde, eine einfache Verbindung zwischen einem Polyeder und einem Klemmelement zu entwickeln, das sich nicht nur leicht aufbringen, sondern auch wieder leicht lösen läßt und das einen Übergang von einer klemmenden in eine nichtklemmende Position ermöglicht.

Die Lösung der geschilderten Aufgabe erfolgt durch eine Verbindung nach Patentanspruch 1. Ein flächenhaften Klemmelement bildet längs der Kontur einer Ausnehmung Berührungszonen zu einem Polyeder in einer Klemmposition, zwischen denen die Kontur zu jenem Polyeder Abstand hält, so daß in einer zur Klemmpossition verdrehten Position allseitig Abstand verbleibt. Der festzuklemmende Polyeder, oder der Polyeder an dem das Klemmelement zu befestigen ist, braucht lediglich relativ zum Klemmelement verdreht zu werden, um in Zonen, in denen das Klemmelement zum Polyeder außer Eingriff steht, mit Spiel abnehmbar zu sein.

Ein bekannte flächenhaftes Klemmelement (DE-U-1 979 415) bildet eine selbsthemmende Scheibe mit abgewinkelten Zungen, wodurch Schrauben unverlierbar werden können. Die als Ansätze bezeichneten Zungen können durch Flachdrücken zwischen einem Abdeckkörper und einem Basiskörper beim Anziehen einer Schraube zum befestigen des Abdeckkörpers am Basiskörper in Eingriff mit der Befestigungsschraube gebracht werden. Ohne Flachdrücken greift die bekannte selbsthemmende Scheibe in keiner Verdrehungslage und nach dem Flachdrücken in jeder Verdrehungslage ein. Die Klemmposition wird also mittelbar über einen zu befestigenden Körper und einen Basiskörper erzielt. Bei der erfindungsgemäßen Verbindung zwischen einem Polyeder und einem flächenhaften Klemmelement kann das Klemmelement reversibel aus einer nicht klemmenden Position direkt in eine klemmende Position zum Polyeder gebracht werden.

Bei einer Verbindung für einen Polyeder mit quadratischem Querschnitt und bei im wesentlichen quadratischer Kontur der Ausnehmung im Klemmkörper, wird die Kontur vorteilhafterweise folgendermaßen ausgeführt:
Die Seitenlänge des Querschnitts des Polyeders wird kleiner als eine freie Diagonale der Kontur des Klemmelements gehalten, wobei die Diagonale der Kontur durch vorstehendes Material zu einer freien Diagonale verkürzt ist.
Die freie Diagonale der Kontur wird kleiner als die Diagonale des Querschnitts gehalten.
Diese wird kleiner als die Seitenlänge der Kontur ausgeführt.

Die freie Diagonale kann insbesondre dadurch verkürzt sein, daß in den Ecken Material zungenförmig vorsteht. Der Klemmkörper wird bei Polyedern aus hartem Material vorzugsweise aus federndem Material gefertigt.

Der Klemmkörper kann allgemein auch so ausgeführt sein, daß die Kontur sich aus einem gedachten Vieleck oder Kreis durch vorspringende Zungen ergibt, deren Zahl gleich oder kleiner als die Anzahl der Ecken eines zu haltenden Polyeders oder eines zu haltenden Körpers mit im wesentlichen kreisförmigem Querschnitt bei vorstehenden Haltezonen ist.

Die Erfindung soll nun anhand von in der Zeichnung grob schematisch wiedergegebenen Ausführungsbeispielen näher erläutert werden:
In FIG 1 ist ein flächenhaftes Klemmelement in Aufsicht in der Klemmposition zu einem Polyeder mit quadratischem Querschnitt veranschaulicht.
In FIG 2 ist das Klemmelement nach FIG 1 außer Eingriff, also in der gelösten bzw. verdrehten Position, wiedergegeben.
In FIG 3 ist ein Anwendungsbeispiel für das Klemmelement veranschaulicht.
In FIG 4 ist ein anderes Ausführungsbeispiel des Klemmelements zusammen mit einem festzuklemmenden Körper im Querschnitt wiedergegeben.

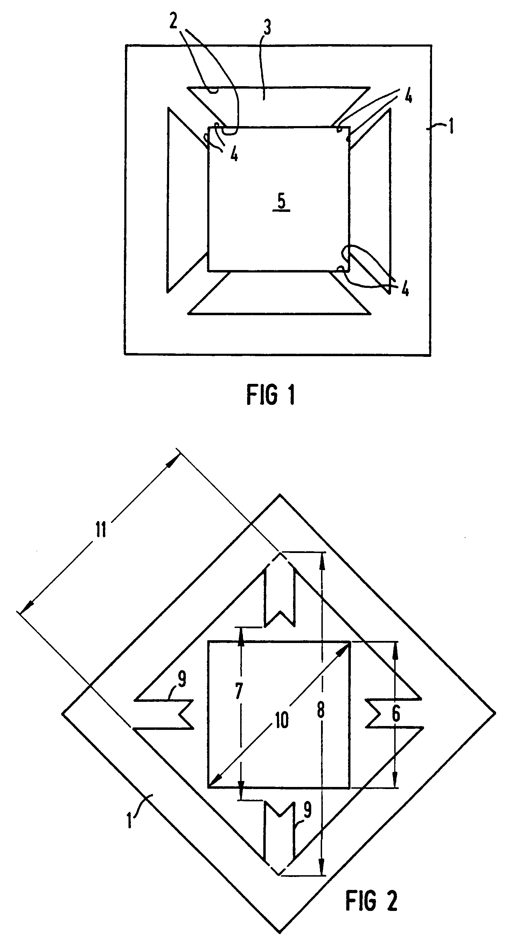

Das flächenhafte Klemmelement 1 nach FIG 1 weist längs der Kontur 2 einer Ausnehmung 3 Berührungszonen 4 zu einem Polyeder 5 auf. In der Klemmposition stehen die Berührungszonen 4 am Polyeder 5 auf. Im Ausführungsbeispiel hat der Polyeder 5 einen in etwa quadratischen Querschnitt. Zwischen den Berührungszonen 4 hält die Kontur 2 zu dem Polyeder 5 Abstand, und zwar so, daß in einer verdrehten Position nach FIG 2 auch hinsichtlich der Berührungszone allseitig Abstand zum Polyeder 5 verbleibt. Es genügt also, das Klemmelement 1 oder den Polyeder 5 relativ gegen das andere Teil zu verdrehen, um das Klemmelement 1 zu lösen und abnehmen zu können. FIG 2 veranschaulicht die verdrehte Position.

Bei einem Polyeder 5 mit quadratischem Querschnitt und bei im wesentlichen quadratischer Kontur 2 der Ausnehmung 3 im Klemmelement kann die Kontur folgendermaßen ausgeführt sein:
- Die Seitenlänge 6 des Querschnitts nach FIG 2 ist kleiner als die freie Diagonale 7 der Kontur, wobei die Diagonale 8 der Kontur 2 durch vorstehendes Material, den Zungen 9, zu ihrer freien Diagonale 7 verkürzt ist.
- Die freie Diagonale 7 der Kontur 2 ist kleiner als die Diagonale 10 des Querschnitts.
- Die Diagonale 10 des Querschnitts ist kleiner als die Seitenlänge 11 der Kontur.

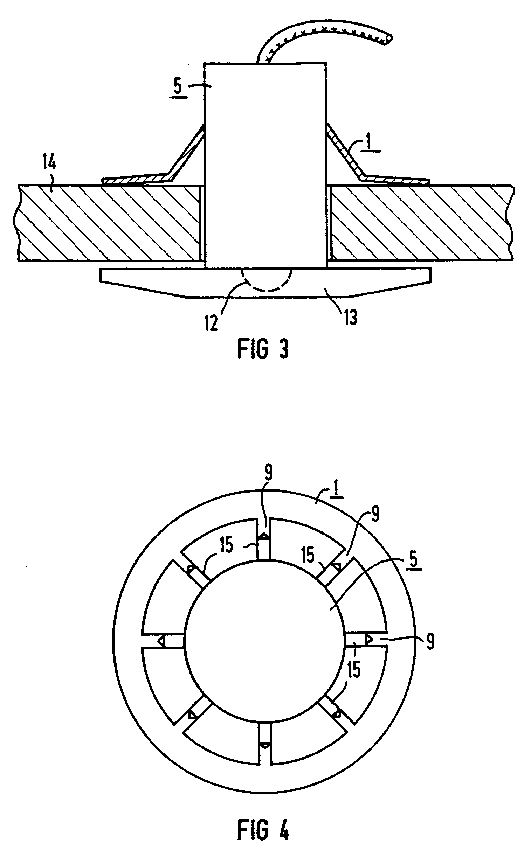

Im Anwendungsbeispiel nach FIG 3 wird ein Infrarotgerät mit einem viereckigen Polyeder 5 als Gehäuse in Seitenansicht wiedergegeben. Es kann ein Infrarotsensor oder ein Infrarotsender sein, der mit einer Linse 12 in einer Abdeckung 13 arbeitet. Das Infrarotgerät wird in der Ausnehmung einer Decke mit den Deckanplatten 14 zwischen dem Flansch der Abdeckung 13 und dem flächenhaften Klemmelement 1 verspannt.

Das Klemmelement kann nach FIG 4 auch eine Kontur aufweisen, die sich aus einem gedachten Vieleck bzw. Kreis, wie dargestellt, durch vorspringende Zungen 9 ergibt. Die Zahl der Zungen ist im Ausführungsbeispiel gleich der Anzahl der Ecken eines zu haltenden Körpers. Im Ausführungsbeispiel weist der zu haltende Körper im wesentlichen kreisförmigen Querschnitt auf, an dem Haltezonen 15 vorstehen. Im Ausführungsbeispiel können die Haltezonen 15 als senkrecht zur Zeichenebene sich erstreckende Stege verstanden werden. Die Zahl der vorspringenden Zungen 9 kann auch kleiner als die Anzahl der Ecken bzw. Haltezonen des zu haltenden Körpers sein.

## Patentansprüche

1. Verbindung mit einem Polyeder (5) und einem flächenhaften Klemmelement (1), das längs der Kontur (2) einer Ausnehmung (3) Berührungszonen (4) zum Polyeder (5) in einer Klemmposition bildet, zwischen denen die Kontur zu jenem Polyeder (5) Abstand hält, so daß in einer zur Klemmposition verdrehten Position allseitig Abstand verbleibt.

2. Verbindung nach Anspruch 1, **dadurch gekennzeichnet**, daß für einen Polyeder (5) mit quadratischem Querschnitt und bei im wesentlichen quadratischer Kontur (2) der Ausnehmung (3) im Klemmelement, die Kontur derart ausgeführt ist, daß
- die Seitenlänge (6) des Querschnitts kleiner als die freie Diagonale (7) der Kontur (2) ist, wobei die Diagonale (8) der Kontur durch vorstehendes Material in ihrer freien Diagonale (7) verkürzt ist,
- daß die freie Diagonale (7) der Kontur (2) kleiner als die Diagonale (10) des Querschnitts ist
- und diese kleiner als die Seitenlänge (11) der Kontur ist.

3. Verbindung nach Anspruch 1, **dadurch gekennzeichnet**, daß die Kontur (2) sich aus einem gedachten Vieleck oder Kreis durch vorspringende Zungen (9) ergibt, deren Zahl gleich oder kleiner als die Anzahl der Ecken eines zu haltenden Polyeders oder eines zu haltenden Körpers mit im wesentlichen kreisförmigem Querschnitt bei vorstehenden Haltezonen (15) ist.

## Claims

1. Connection with a polyhedron (5) and a flat clamping element (1), which forms along the contour (2) of a recess (3) contact zones (4) with respect to the polyhedron (5) in a clamping position, between which the contour maintains a clearance to that polyhedron (5), so that clearance remains on all sides in a position rotated with respect to the clamping position.

2. Connection according to claim 1, characterized in that for a polyhedron (5) with square cross section and with substantially square contour (2) of the recess (3) in the clamping element, the contour is designed in such a way that
- the side length (6) of the cross section is smaller than the free diagonal (7) of the contour (2), whereby the diagonal (8) of the contour is shortened by projecting material in its free diagonal (7),
- the free diagonal (7) of the contour (2) is smaller than the diagonal (10) of the cross section
- and this is smaller than the side length (11) of the contour.

3. Connection according to claim 1, characterized in that the contour (2) results from an assumed polygon or circle through projecting tongues (9), the number of which is equal to or smaller than the number of the corners of a polyhedron to be held or a body to be held with substantially circular cross section with projecting holding zones (15).

## Revendications

1. Système de liaison comportant un polyèdre (5) et un élément de serrage (1) de surface étendue, qui forme, le long du contour (2) d'un évidement (3), des zones de contact (4) pour le polyèdre (5) dans une position de serrage, zones entre lesquelles le contour est maintenu à distance dudit polyèdre (5), en telle sorte qu'un écartement subsiste de tous côtés dans une position pivotée par rapport à la position de serrage.

2. Système de liaison suivant la revendication 1, caractérisé par le fait que pour un polyèdre (5) possédant une section transversale carrée et dans le cas d'un contour sensiblement carré (2) de l'évidement (3) dans l'élément de serrage, le contour est agencé de telle sorte que
- la longueur (6) du côté de la section transversale est inférieure à la diagonale (7), qui correspond à l'espace intérieur libre, du contour (2), la diagonale (8) du contour étant réduite à la diagonale (7), qui correspond à l'espace intérieur libre, en raison de la présence d'un matériau saillant,
- que la diagonale (7), qui correspond à l'espace intérieur libre, du contour (2) est plus courte à la diagonale (10) de la section transversale, et
- cette diagonale est d'une longueur inférieure à la longueur (11) du côté du contour.

3. Système de liaison suivant la revendication 1, caractérisé par le fait que le contour (2) est formé par un polygone ou un cercle imaginaire, défini par des languettes saillantes (9), dont le nombre est égal ou inférieur au nombre des angles d'un polyèdre devant être maintenu ou d'un corps devant être maintenu, possédant une section transversale sensiblement circulaire, dans le cas de la présence de zones saillantes de maintien (15).
